Europäisches Patentamt

European Patent Office

Office européen des brevets

(19)

(11) **EP 1 136 948 A1**

(12) **EUROPEAN PATENT APPLICATION**

(43) Date of publication:
**26.09.2001 Bulletin 2001/39**

(51) Int Cl.[7]: **G06T 5/00**

(21) Application number: **00830208.5**

(22) Date of filing: **21.03.2000**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **European Community
2920 Luxembourg (LU)**

(72) Inventor: **De Grandi, Gianfranco
21027 Ispra (IT)**

(74) Representative: **Cerbaro, Elena, Dr. et al
STUDIO TORTA S.r.l.,
Via Viotti, 9
10121 Torino (IT)**

(54) **Method of multitime filtering coherent-sensor detected images**

(57)      A method of multitime filtering coherent-sensor detected images comprising the step of detecting and memorizing (100) a series of two-dimensional digital input images $I_0$, $I_1$, ..., $I_n$ of the same target detected, in the same boundary conditions, using the same sensor and at different successive times t = $T_0$, $T_1$, ..., $T_n$, by means of a coherent sensor, in particular, a radar sensor. A dyadic discrete Wavelet transform is then applied to each input image.

FIG. 1

DETECT, MEMORIZE AND RECORD SERIES OF IMAGES. Io, 11...In   100

CALCULATE WAVELET DYADIC TRANSFORM
Wx (x,y,t,s) Wy (x,y,t,s) S(x,y,t,s)   101

POLAR REPRESENTATION OF WAVELET COMPONENTS
$M(x,y,t,s) = \sqrt{[Wx(x,y,t,s)]^2 + [Wy(x,y,t,s)]^2}$
$c = actg \dfrac{Wx(x,y,t,s)}{Wy(x,y,t,s)}$   102

NORMALIZE MODULUS
M norm (x,y,t,s)= M (x,y,t,s)/S (x,y,t,s)   103

DETERMINE LOCAL MAXIMUM VALUES OF NORMALIZED MODULUS   104

CONNECT LOCAL MAXIMUM VALUES   105

STRUCT (x,y,t)

STRUCTURE IMAGES   201

**Description**

The present invention relates to a method of multitime filtering coherent-sensor detected images.

Images of fixed targets are known to be detected using coherent (in particular, radar) sensors, e.g. images of the same portion of the earth's surface using satellite-mounted coherent radar sensors.

Such images are all subject to speckle noise generated by the target matter scattering the coherent radiation used by the sensor, and the statistical properties of which depend on the type of target.

Images of the same target are also detected at different times and supplied to an estimator, which, on the basis of the information in the various images, determines the development of a given phenomenon, which may, for example, be a physical process (e.g. the spread of contaminating substances over a given surface of the sea), a biological process (e.g. crop growth on the earth's surface), an atmospheric process (cloud movements), or a manmade process (e.g. deforestation of a given area).

It is an object of the present invention to provide a method of effectively filtering the speckle noise intrinsic in such images, so as to permit accurate reconstruction of the phenomenon.

According to the present invention, there is provided a method of multitime filtering images generated by a coherent sensor, as described in Claim 1.

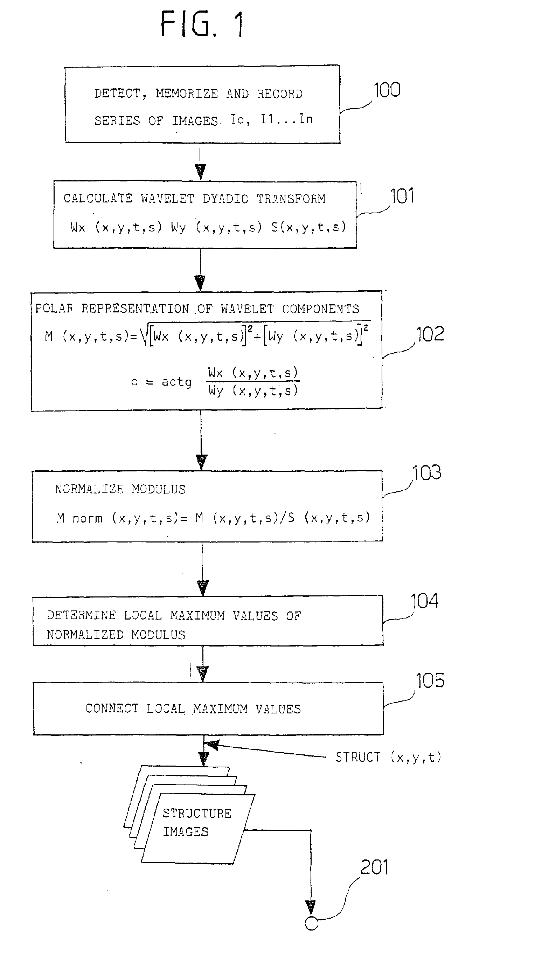

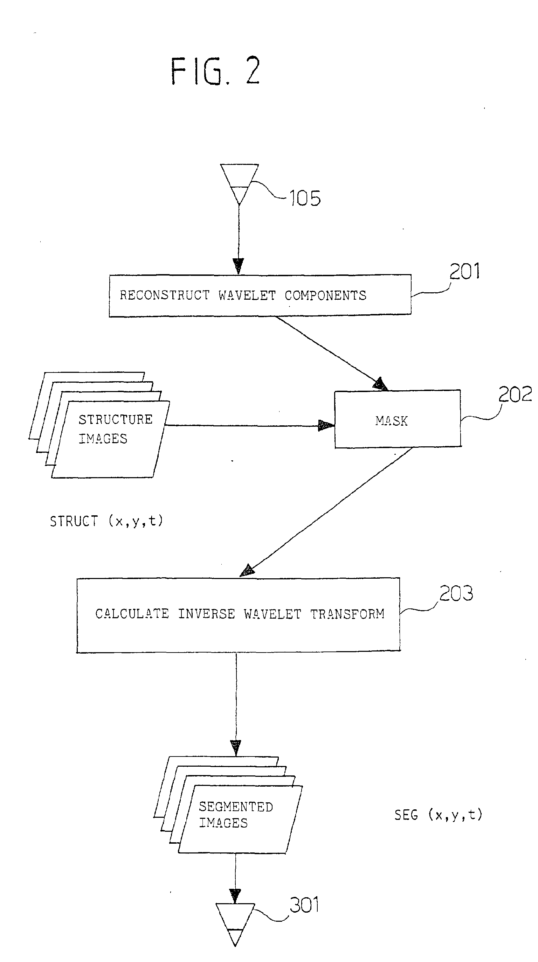

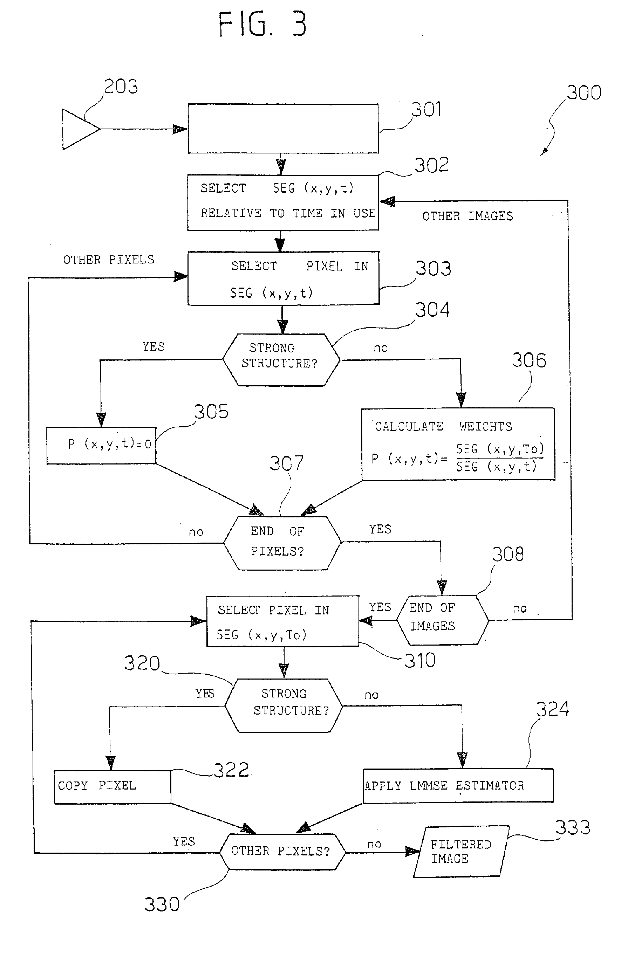

A preferred embodiment of the invention will be described with reference to the accompanying Figures 1, 2 and 3 showing successive steps in the method according to the present invention.

With reference to the accompanying Figures, the method according to the present invention comprises a first block 100, which detects, memorizes and records (by means of known algorithms) a series (or so-called stack) of two-dimensional digital images $I_0, I_1, ..., I_n$ of the same target detected, in the same boundary conditions, using the same sensor and at different successive times $t = T_0, T_1, ..., T_n$, by a coherent (in particular, radar) sensor, which, as is known, uses radiation which maintains substantially constant phase properties during image acquisition.

More specifically, two-dimensional digital images $I_0, I_1, ..., I_n$ are detected with the same lighting geometry to prevent spatial distortion or variations in reflectivity caused by speckle noise or by factors other than gradual development of the phenomenon being examined.

Images $I_0, I_1, ..., I_n$ are rectangular and may be represented by two-dimensional matrixes of pixels $P(x,y)$, each of which is defined by a whole number representing the reflectance of the pixel. As stated, the reflectance of corresponding pixels in different images may vary due to developments in the underlying phenomenon and to the presence of speckle noise.

Block 100 is followed by a block 101, which, for each image in the stack relating to a given time t, calculates a Wavelet dyadic discrete transform used as a multiscale differential operator.

More specifically, the Wavelet transform implemented (which uses a fourth-order B-spline function as a mother Wavelet) generates a smooth component (or so-called smooth signal or image) $S(x,y,t,s)$ obtained by filtering the input image (by means of the low-pass branch of the Wavelet transform) and therefore by convolution of the input image and the smoothing function.

The Wavelet transform also generates, for each x,y pixel in the smooth image, a first cartesian component $Wx(x,y,t,s)$ proportional to the smooth signal gradient ($\frac{d}{dx}(S(x,y,t,s))$) calculated in a first direction (x), and a second cartesian component $Wy(x,y,t,s)$ proportional to the smooth signal gradient ($\frac{d}{dy}(S(x,y,t,s))$) calculated in a second direction (y) perpendicular to the first. Should the Wavelet transform be iterated, the above operations (signal filtration and gradient calculation in directions x and y) are again applied to the smooth component $S(x,y,t,s)$ to obtain a further three components (one smooth and two cartesian) ; each iteration of the Wavelet transform corresponds to an increase in a scale s factor; each calculated component is memorized so as to be available for subsequent processing; and sampling is maintained constant at all scales s.

Block 101 is followed by a block 102, which, on the basis of the two cartesian Wavelet components in directions x and y calculated in block 101, extracts the polar representation of the cartesian Wavelet components calculating (in known manner) the modulus $M(x,y,t,s)$ of the cartesian Wavelet components and the angle between cartesian Wavelet components $Wx(x,y,t,s)$, $Wy(x,y,t,s)$, i.e. :

$$M(x,y,t,s) = \sqrt{Wx(x,y,t,s)^2 + Wy(x,y,t,s)^2}$$

$$\alpha = \text{arct} \left( Wx(x,y,t,s) / Wy(x,y,t,s) \right)$$

Block 102 is followed by a block 103, which normalizes the previously calculated modulus $M(x,y,t,s)$ by means of the previously calculated smooth component (signal) $S(x,y,t,s)$, i.e. :

$$Mnorm(x,y,t,s) = M(x,y,t,s)/S(x,y,t,s)$$

The above operation serves to equalize the speckle noise in the image.

Block 103 is followed by a block 104, which determines the local maximum values of the normalized modulus $Mnorm(x,y,t,s)$ (by means of known algorithms which analyze the normalized-modulus image pixel by pixel). Local maximum values typically correspond to transition regions in the image, i.e. regions in which reflectance changes rapidly within a small space, and which typically indicate the edges of adjacent stationary regions having different reflectances which are constant within each region. A stationary region is such in the statistical sense, i.e. the mean value and autocorrelation of the reflectance are independent of location.

The local maximum values extracted in block 104 are memorized and sent to a next block 105, which (by means of known algorithms) connects the local maximum values by means of connecting lines, e.g. broken connecting lines, which typically indicate the boundaries of homogeneous areas and point targets (or so-called "strong structures") in the input images.

For the various input images I in the stack, blocks 101-105 thus generate a corresponding number of structure images $STRUCT(x,y,t,s)$ containing information concerning the presence and arrangement of strong structures in each input image.

Structure images are calculated at a predetermined scale s=sp for all of times t. More specifically, structure images $STRUCT(x,y,t,s)$ are calculated at the finest scale compatible with the signal-noise ratio. For example, in the case of a 4-look radar sensor (i.e. a sensor for supplying an image from a mean of four images - e.g. an image detected by ESA (European Space Agency) ERS (Earth Resource Satellite) 1PRI) the predetermined scale is sp=2.

In the example embodiment shown, the Wavelet transform is iterated once, and the structure image is represented at predetermined scale sp=2.

Block 105 is followed by a block 201, which, for each input image relative to a given time t and for each calculated scale s, makes available (in particular, recalls from the memory) the various smooth components $S(x,y,z,s)$ and cartesian components $Wx(x,y,t,s)$, $Wy(x,y,t,s)$ of the Wavelet transform.

For example, if the Wavelet transform has only been iterated once, components $Wx(x,y,t,1)$, $Wy(x,y,t,1)$ and $S(x,y,z,1)$ at the higher scale s=1, and components $Wx(x,y,t,2)$, $Wy(x,y,t,2)$ and $S(x,y,z,2)$ at the lower scale s=2 are available for each image I.

A lower scale, with respect to a given one, means a scale obtained by iterating the Wavelet transform at least once with respect to the components of the given scale.

More specifically, block 201 (by means of a known algorithm based on the scale properties of a function) reconstructs the higher-scale cartesian Wavelet components (s=1 in the example) from the lower-scale components (s=2 in the example).

The above operation is performed for all of times $T_0$, $T_1$, ..., $T_n$, and provides for obtaining reconstructed higher-scale (s=1 in the example) cartesian Wavelet components $Wrx(x,y,t,1)$, $Wry(x,y,t,1)$.

Higher-scale s=1 Wavelet components, in fact, contain a high degree of noise introduced by filtering small structures (details) in the two-dimensional input image stack. So, instead of using the calculated higher-scale s=1 components directly, subsequent operations are performed using reconstructed Wavelet components, which are less affected by noise by being derived from lower-scale s=2 Wavelet components which are intrinsically less subject to noise. The above reconstruction is mainly reliable as regards strong structures.

The reconstructed cartesian Wavelet components may be subjected to further low-pass filtration (smoothing) in block 201.

Block 201 is followed by a block 202, which masks the cartesian Wavelet components (reconstructed higher-scale and calculated lower-scale) on the basis of the structure images generated in block 105. In particular:

for each time t and for different scales (in the example, scales s=1 and s=2), the pixels of the cartesian Wavelet components (both reconstructed and calculated) corresponding to strong structures in the corresponding structure image (i.e. in the structure image relative to the same time t) are retained to create corrected Wavelet components $Wcx(x,y,t,2)$, $Wcy(x,y,t,2)$, $Wcx(x,y,t,1)$ and $Wcy(x,y,t,1)$; and
for each time t and for different scales, the pixels of the cartesian Wavelet components (both reconstructed and calculated) not corresponding to strong structures in the corresponding structure image (i.e. in the structure image relative to the same time t) are zeroed to create corrected Wavelet components $Wcx(x,y,t,2)$, $Wcy(x,y,t,2)$, $Wcx(x,y,t,1)$ and $Wcy(x,y,t,1)$.

Block 202 is followed by a block 203, which, for each image I, calculates the inverse Wavelet transform using, as input variables, the corrected Wavelet components at various scales s, and the smooth-signal components at various scales (s=1 and s=2, in the example), i.e.:

S(x,y,z,1);
S(x,y,z,2);
Wcx(x,y,t,2);
Wcy(x,y,t,2);
Wcx(x,y,t,1);
Wcy(x,y,t,1)

The inverse Wavelet transform generates, for each time $T_0$, $T_1$, ..., $T_n$, a corresponding segmented two-dimensional digital image SEG(x,y,t). Since the segmented images SEG(x,y,t) relate to one scale (s=1), the scale index is not indicated.

The succeeding blocks are supplied with structure images STRUCT(x,y,t) (containing information concerning the presence and arrangement of strong structures in each input image), and with segmented two-dimensional digital images SEG(x,y,t).

Block 203 is followed by a block 300, which constitutes the actual process of estimating (reconstructing) the reflectivity of an image in the time series from:

- structural information (structure images STRUCT(x,y,t));
- information concerning the expected value in stationary areas (segmented images SEG(x,y,t)); and
- samples of the same target at different times in the starting images (image stack).

One image in the series - indicated time $T_0$ image - is filtered.

Block 300 comprises a first block 301, which provides for initializing the filtering operations.

Block 301 is followed by a block 302, which selects the segmented two-dimensional image SEG(x,y,t) relative to the time t in use (to begin with, the segmented image relative to first time t=$T_0$ is selected, followed successively by images relative to increasing times t).

Block 302 is followed by a block 303, which selects a pixel x,y in the segmented two-dimensional image SEG(x,y,t) relative to the time selected in block 302 (initially time t=$T_0$ followed successively by all the other times t). More specifically, block 303 is followed by a block 304, which determines whether the selected pixel is relative to a strong structure. This is done on the corresponding structure image STRUCT(x,y,t) (i.e. relative to the same time) by determining whether a pixel corresponding to the one selected in block 303 (i.e. having the same x,y cartesian coordinates) is in fact relative to a strong structure.

In the event of a positive response, block 304 goes on to a block 305; conversely, block 304 goes on to a block 306.

For the pixel selected in block 304, block 305 calculates a coefficient (weight) p(x,y,t) of zero (p(x,y,t)=0); whereas, for the pixel selected in block 304, block 306 calculates a coefficient (weight) p(x,y,t) defined by the ratio between the value of the pixel in the segmented two-dimensional image SEG(x,y,$T_0$) relative to time $T_0$, and the value of the pixel in the segmented two-dimensional image SEG(x,y,t) relative to the time t in use, that is:

$$p(x,y,t) = SEG(x,y,T_0)/SEG(x,y,t)$$

Blocks 305 and 306 are followed by a block 307, which determines whether all the pixels in the segmented image relative to time t in use have been analyzed. In the event of a negative response (more pixels to be examined), block 307 goes back to block 303, which selects another pixel x,y in the segmented image. In the event of a positive response (all the pixels in the segmented image relative to time t have been examined), block 307 goes on to a block 308, which determines whether the segmented images relative to different times have all been analyzed. In the event of a negative response (segmented two-dimensional digital images SEG(x,y,t) relative to other times still to be examined), block 308 goes back to block 302, which selects a segmented two-dimensional image relative to a time not yet examined and following the previous time.

In the event of a positive response (segmented images SEG(x,y,t) relative to all times have been analyzed), block 308 goes on to a block 310.

The above operations provide, for each segmented image relative to a given time t, for calculating a number of weights p(x,y,t), each relative to a respective pixel in the segmented image.

Block 310 selects a pixel x,y in the segmented two-dimensional image relative to the initial time ($T_0$).

Block 310 is followed by a block 320, which determines whether the pixel selected in block 310 is relative to a strong structure. This is done (as in block 304) on the structure image STRUCT(x,y,$T_0$) also relative to initial time $T_0$ by determining whether a pixel corresponding to the one selected in block 310 corresponds in fact to a strong structure.

In the event of a positive response, block 320 goes on to a block 322; conversely, block 320 goes on to a block 324.

In block 322, the pixel in the segmented image relative to time $T_0$ selected in block 310 is assigned the same value as in the corresponding original image I (also relative to time $T_0$ - in other words, the pixel in the original image is "copied" into the segmented image). Block 324, on the other hand, calculates (by means of known algorithms), for the pixel x,y selected in block 310, the value of an LMMSE estimator using the weights calculated in blocks 305 and 306.

The LMMSE estimator uses a linear (summative) combination of addends, each of which relates to a time t and comprises the product of the previously calculated weight p(x,y,t) for that time and the value of the pixel in the original image relative to the same time, that is:

$$\text{value of pixel (x,y) in the filtered final image} = p(x,y,T_0)I_0(x,y) + p(x,y,T_1)I_1(x,y) \ldots \ldots p(x,y,T_n)I_n(x,y)$$

This formulation of the estimator assumes the speckle noise in the images at different times is unrelated, which assumption is valid in the case of independent observations, e.g. for a time series t of radar images of the same target. In the case of related-speckle observations, such as a series of multifrequency polarimetric images, the weights in the estimator must be multiplied further by a speckle covariance matrix estimated in the presegmented stationary areas.

Blocks 322 and 324 are followed by a block 330, which determines whether all the pixels in the segmented image relative to initial time $T_0$ have been analyzed. In the event of a negative response (other pixels to be examined), block 330 goes back to block 310, which selects another pixel x,y in the image. In the case of a positive response (no more pixels to be examined in the segmented image relative to initial time $T_0$), block 330 is followed by a block 333, which supplies a filtered final image with the pixels generated by the operations performed in blocks 322 and 324.

The main advantages of the method according to the present invention, and which can be seen in the filtered final image, are as follows:

- strong structures are determined more accurately;
- even moving points, i.e. with different locations in images relative to different times, can be determined, thus enabling tracking of a phenomenon varying in time as well as space;
- the intrinsic texture of radar relectivity in the stationary regions is maintained at the original resolution (due to estimation using overall means in time) ;
- details (point targets, boundaries) are better preserved as compared with methods employing moving-window local estimators;
- transition regions (edges) between stationary regions are better defined;
- better adaptive estimation of expected reflectivity values in homogeneous regions.

**Claims**

1. A method of multitime filtering coherent-sensor detected images, **characterized by** comprising the steps of:

   - detecting and memorizing (100) a series of two-dimensional digital input images $I_0, I_1, ..., I_n$ of the same target detected, in the same boundary conditions, using the same sensor and at different successive times t = $T_0$, $T_1, ..., T_n$, by means of a coherent sensor, in particular, a radar sensor; said two-dimensional digital input images $I_0, I_1, ..., I_n$ being representable by two-dimensional matrixes of pixels P(x,y), each defined by a whole number representing the reflectance of the pixel;
   - calculating (101), for each two-dimensional digital input image relative to a time t, a Wavelet dyadic discrete transform used as a multiscale operator; said operation of calculating (101) the Wavelet transform generating a smooth component S(x,y,t,s) obtained by filtering the input image; said operation of calculating (101) the Wavelet transform also generating a first cartesian Wavelet component Wx(x,y,t,s) proportional to the smooth component gradient ($\frac{d}{dx}$(S(x,y,t,s)) calculated in a first direction (direction x), and a second cartesian Wavelet component Wy(x,y,t,s) proportional to the smooth component gradient ($\frac{d}{dy}$(S(x,y,t,s)) calculated in a second direction (direction y) perpendicular to the first;
   - iterating at least once said operation of calculating the Wavelet transform to obtain at least a further three components; each iteration of the Wavelet transform corresponding to an increase in a scale s factor;
   - extracting (102) the polar representation of the cartesian Wavelet components calculating the modulus M(x,y,t,s) and the angle between the two cartesian Wavelet components Wx(x,y,t,s), Wy(x,y,t,s);
   - normalizing (103) each calculated modulus M(x,y,t,s) by means of the respective smooth component S(x,y,t,s) to equalize the speckle noise in the image;

- analyzing (104), pixel by pixel, the image relative to the normalized moduli to determine the local maximum values of the normalized moduli Mnorm(x,y,t,s);
- connecting (105) the determined local maximum values by means of connecting lines indicating the boundaries of homogeneous regions and point targets, to generate, for each input image I in the series, a corresponding structure image STRUCT(x,y,t,s) containing information concerning the presence and arrangement of strong structures; said structure images being calculated at a predetermined scale s=sp for all of times t;
- reconstructing (201) the cartesian Wavelet components at a higher scale (s=1) from components at a lower scale (s=2); said reconstruction (201) being performed for all of times $T_0$, $T_1$, ..., $T_n$ to obtain reconstructed cartesian Wavelet components Wrx(x,y,t,1), Wry(x,y,t,1);
- performing a masking operation (202) to obtain corrected cartesian components; said masking operation comprising the operations of:

   . retaining, for each time t and for different scales, the pixels, in the cartesian Wavelet components, corresponding to strong structures in the corresponding structure image;
   . zeroing, for each time t and for different scales, the pixels, in the cartesian Wavelet components, not corresponding to strong structures in the corresponding structure image;

- calculating (203) the inverse Wavelet transform using, as input variables, the corrected cartesian Wavelet components at various scales s, and the smooth components at various scales s; said operation of calculating the inverse Wavelet transform generating, for each time $T_0$, $T_1$, ..., $T_n$, a corresponding segmented two-dimensional digital image SEG(x,y,t); the generated said segmented images SEG(x,y,t) being relative to one scale (s=1); and
- reconstructing relectivity using the information in the structure images STRUCT(x,y,t,s) and segmented images SEG(x,y,t).

2. A method as claimed in Claim 1, **characterized in that** the operations for calculating the Wavelet transform are iterated once;
   said reconstruction step being performed by reconstructing (201) the cartesian Wavelet components at scale s=1 from components at scale s=2.

3. A method as claimed in Claim 1 or 2, **characterized by** comprising a step of filtering the reconstructed cartesian Wavelet components.

4. A method as claimed in any one of the foregoing Claims, **characterized in that** said step of reconstructing reflectivity comprises the steps of:

- selecting (302) the segmented two-dimensional image SEG(x,y,t) relative to a time t in use;
- selecting (303) a pixel x,y in the selected segmented image;
- checking (304) whether the selected pixel is relative to a strong structure; said check being performed on a structure image STRUCT(x,y,t) corresponding to the selected segmented image, by determining whether a pixel corresponding to the selected pixel is relative to a strong structure; in the event the selected pixel is found to relate to a strong structure, a weight p(x,y,t) equal to zero (p(x,y,t)=0) being calculated (305) for said pixel; in the event the selected pixel is not found to relate to a strong structure, said pixel being calculated (305) a weight p(x,y,t) equal to the ratio between the value of the pixel in the segmented two-dimensional image SEG $(x,y,T_0)$ relative to an initial time $T_0$, and the value of the pixel in the segmented two-dimensional image SEG (x,y,t) relative to the time t currently in use; and
- repeating said steps of selecting (303) and checking (304) said pixel for all the pixels in the segmented image (307) and for all the images (308) relative to different times, to calculate a number of weights p(x,y,t), each relative to a respective pixel in a respective segmented image.

5. A method as claimed in Claim 4, **characterized by** comprising the steps of:

- selecting (310) the segmented two-dimensional image relative to said initial time $T_0$;
- selecting (320) a pixel x,y in the segmented two-dimensional image relative to said initial time $T_0$;
- checking whether the selected pixel in the selected segmented image is relative to a strong structure; said check being performed on the corresponding structure image STRUCT(x,y,t), by determining whether a pixel corresponding to the selected pixel is relative to a strong structure; in the event the selected pixel is found to relate to a strong structure, the pixel in the segmented image relative to the initial time $T_0$ being assigned (322)

the same value as in the corresponding original input image I; in the event the selected pixel is not found to relate to a strong structure, the pixel in the segmented image relative to the initial time $T_0$ being assigned (322) a value calculated (324) by means of an LMMSE estimator using the weights calculated previously (305, 306); and

- performing said steps of selecting (310) and checking (320) said pixel for all the pixels in the segmented two-dimensional image relative to said initial time $T_0$, to provide a filtered final image.

6. A method as claimed in Claim 5, **characterized in that** said step of calculating (324) an LMMSE estimator comprises the steps of calculating a linear combination of addends, each of which is relative to a time t and comprises the product of the weight p(x,y,t) previously calculated for that time, and the value of the pixel in the original input image relative to the same time.

# FIG. 1

DETECT, MEMORIZE AND RECORD
SERIES OF IMAGES Io, I1...In — 100

CALCULATE WAVELET DYADIC TRANSFORM
Wx (x,y,t,s) Wy (x,y,t,s) S(x,y,t,s) — 101

POLAR REPRESENTATION OF WAVELET COMPONENTS

$$M(x,y,t,s) = \sqrt{[Wx(x,y,t,s)]^2 + [Wy(x,y,t,s)]^2}$$

$$c = \text{actg}\ \frac{Wx(x,y,t,s)}{Wy(x,y,t,s)}$$

— 102

NORMALIZE MODULUS

$$M\ norm(x,y,t,s) = M(x,y,t,s)/S(x,y,t,s)$$

— 103

DETERMINE LOCAL MAXIMUM VALUES OF
NORMALIZED MODULUS — 104

CONNECT LOCAL MAXIMUM VALUES — 105

STRUCT (x,y,t)

STRUCTURE
IMAGES

201

# FIG. 2

STRUCT $(x,y,t)$

SEG $(x,y,t)$

105

201 — RECONSTRUCT WAVELET COMPONENTS

STRUCTURE IMAGES

202 — MASK

203 — CALCULATE INVERSE WAVELET TRANSFORM

SEGMENTED IMAGES

301

# FIG. 3

*203*

*300*

*301*

*302*

SELECT   SEG (x,y,t)

RELATIVE TO TIME IN USE

OTHER IMAGES

OTHER PIXELS

SELECT   PIXEL IN

SEG (x,y,t)

*303*

*304*

YES          STRONG
STRUCTURE?          no

*306*

*305*

P (x,y,t)=0

CALCULATE   WEIGHTS

$P (x,y,t) = \dfrac{SEG (x,y,To)}{SEG (x,y,t)}$

*307*

no          END   OF
PIXELS?          YES

*308*

SELECT PIXEL IN

SEG (x,y,To)          YES          END OF
IMAGES          no

*310*

*320*

YES          STRONG
STRUCTURE?          no

*324*

*322*

COPY PIXEL          APPLY LMMSE ESTIMATOR

*333*

YES          OTHER PIXELS?          no          FILTERED
IMAGE

*330*

**European Patent Office**

## EUROPEAN SEARCH REPORT

Application Number

EP 00 83 0208

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 260 791 A (LUBIN JEFFREY) 9 November 1993 (1993-11-09) * abstract * * column 1, line 36 - line 58 * * column 7, line 52 - column 8, line 18 * | 1-6 | G06T5/00 |
| A | LEDUC J -P: "Spatio-temporal wavelet transforms for digital signal analysis" SIGNAL PROCESSING. EUROPEAN JOURNAL DEVOTED TO THE METHODS AND APPLICATIONS OF SIGNAL PROCESSING,NL,ELSEVIER SCIENCE PUBLISHERS B.V. AMSTERDAM, vol. 60, no. 1, 1 July 1997 (1997-07-01), pages 23-41, XP004086325 ISSN: 0165-1684 * abstract * * paragraph '0002! - paragraph '0004!; figures 1-3 * | 1-6 | |
| A | FUKUDA S ET AL: "WAVELET-BASED SPECKLE REDUCTION IN SYNTHETIC APERTURE RADAR IMAGES" ELECTRONICS & COMMUNICATIONS IN JAPAN, PART III - FUNDAMENTAL ELECTRONIC SCIENCE,US,SCRIPTA TECHNICA. NEW YORK, vol. 80, no. 9, 1 September 1997 (1997-09-01), pages 29-36, XP000755623 ISSN: 1042-0967 * abstract * * paragraph '0004!, sentence 31 * | 1-6 | **TECHNICAL FIELDS SEARCHED** (Int.Cl.7) G06T |

The present search report has been drawn up for all claims

| Place of search | Date of completion of the search | Examiner |
|---|---|---|
| THE HAGUE | 9 October 2000 | Gonzalez Ordonez, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 00 83 0208

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2000

| Patent document cited in search report | Publication date | Patent family member(s) | Publication date |
|---|---|---|---|
| US 5260791 A | 09-11-1993 | NONE | |

EPO FORM P0459

For more details about this annex : see Official Journal of the European Patent Office, No. 12/82